# EUROPEAN PATENT APPLICATION

(11) **EP 4 520 742 A1**
(43) Date of publication of application: **12.03.2025**
(21) Application number: 23820037.2
(22) Date of filing: 30.05.2023
(51) Int. Cl.: C04B 35/66, C04B 35/19, C04B 41/87, F27D 5/00, C04B 35/01

(54) **REFRACTORY MOLD FOR SINTERING PRECURSOR MATERIAL**

(30) Priority: 07.06.2022 KR 20220069019; 19.10.2022 KR 20220134588
(71) Applicant: ECOPRO BM CO., LTD., Cheongju-si, Chungcheongbuk-do 28116 (KR)
(72) Inventor: SONG, Heeyoub, Chungcheongbuk-do 28116 (KR); KONG, Bo Hyun, Chungcheongbuk-do 28116 (KR); KIM, Su Jin, Chungcheongbuk-do 28116 (KR); KWAK, Hwan Wook, Chungcheongbuk-do 28116 (KR); JO, Min Su, Chungcheongbuk-do 28116 (KR); NAM, Yu Jin, Chungcheongbuk-do 28116 (KR); CHOI, Moon Ho, Chungcheongbuk-do 28116 (KR); YOON, Inho, Chungcheongbuk-do 28116 (KR); LEE, Seung Ho, Chungcheongbuk-do 28116 (KR); BYOUN, Youngwoo, Chungcheongbuk-do 28116 (KR); KIM, Soo Bong, Chungcheongbuk-do 28116 (KR); JEONG, Jaeyoon, Chungcheongbuk-do 28116 (KR); LEE, Seokmin, Chungcheongbuk-do 28116 (KR)
(74) Representative: BCKIP Part mbB
(86) International application number: PCT/KR2023/007386
(87) International publication number: WO 2023/239101

(57) **Abstract**

The present invention relates to a sagger for firing a precursor material, and more specifically, to a sagger having a space internally provided to load a precursor material. When used to fire a precursor material, the sagger is capable of not only suppressing the generation of by-products but also enhancing the durability of the main body.

## Description

### [Technical Field]

The present invention relates to a sagger for firing a precursor material, and more specifically, to a sagger having a space internally provided to load a precursor material. When used to fire a precursor material, the sagger is capable of not only suppressing the generation of by-products but also enhancing the durability of the main body.

### [Background Art]

Various inorganic compounds are manufactured by thermally treating (firing) precursor materials.

Generally, the firing of precursor materials of inorganic compounds is performed by thermally treating the precursor materials loaded in a thermal treatment container (hereinafter, referred to as a "sagger") having heat resistance and chemical resistance at a predetermined temperature.

In this case, since precursor materials, which are compounds (inorganic compounds or raw materials thereof) to be thermally treated, are loaded in a sagger, they are fired by heating without directly contacting flame, smoke, and the like.

To this end, the sagger fundamentally needs to secure stability, that is, predetermined heat resistance and chemical resistance at a firing temperature of the precursor material.

Representative examples of the inorganic compounds manufactured by thermally treating precursor materials include positive electrode active materials used in lithium batteries.

As the positive electrode active material for a lithium battery, a compound such as lithium nickel oxide, lithium cobalt oxide, lithium manganese oxide, or a composite oxide thereof (e.g., NCM-based and NCA-based lithium composite oxides) may be used.

The positive electrode active material is manufactured by loading a transition metal-containing precursor material and a lithium-containing raw material (e.g., LiOH) in a sagger and then performing thermal treatment at 600 to 1,200 °C.

Accordingly, the sagger that is used in the manufacture of the positive electrode active material is made using, as a main component, a ceramic material having high heat resistance such as cordierite, mullite, spinel, or the like to secure sufficient heat resistance in the above-described thermal treatment temperature range.

Meanwhile, recently, the problem that by-products are produced in a sagger due to side reactions (see the reaction scheme below) between a lithium-containing raw material and the main component of the sagger at the thermal treatment temperature of a precursor material has attracted attention.

Specifically, lithium included in the lithium-containing raw material such as LiOH, Li₂CO₃, or the like, which is input into the sagger to fire a precursor material, may infiltrate into the sagger and react with the main component of the sagger, such as Al₂O₃, SiO₂, or the like, during a firing process.

Due to the infiltration and reaction of lithium, by-products such as Liₓ-(Al/Si)_{y}-O_{z} and the like are formed.

According to the above-described mechanism, as the firing process using the sagger is repeated, a by-product layer deposited on the sagger becomes thicker.

As the by-product layer is formed on the inner wall of the sagger, the inner wall of the sagger is damaged, and thus the strength and lifespan of the sagger may be degraded.

In addition, the by-product layer may be peeled off due to the difference in thermal expansion rate from the sagger during the firing process and thus incorporated into a positive electrode active material.

In order to solve these problems, technology for excluding a Si-containing raw material among the main components of a sagger to reduce the possibility of by-product production or coating the inner wall of a sagger with spinel to reduce side reactions between a sagger and a lithium-containing raw material have been introduced.

However, when the amount of a Si-containing raw material among the main components of the sagger decreases, the amount of an Al-containing raw material needs to increase, and in this case, Al-derived by-products are highly likely to be produced instead of Si-derived by-products. Also, as the amount of a Si-containing raw material among the main components of the sagger is excluded or decreased, the overall strength of the sagger is degraded.

In addition to the peeling problem, due to the characteristics of the sagger repeatedly exposed to high temperature, stress accumulated by a volume change according to a temperature change induces cracking in the sagger, and thus the lifespan characteristics of the sagger are degraded.

### [Related Art Documents]

### [Patent Documents]

(Patent Document 1) Korean Laid-Open Patent Publication No. 10-2020-0058383 (published on May 27, 2020)
(Patent Document 2) Korean Registered Patent No. 10-1161139 (published on July 2, 2012)
(Patent Document 3) Korean Registered Patent No. 10-1448417 (published on October 7, 2014)

### [Disclosure]

### [Technical Problem]

The present specification is directed to providing a sagger that has sufficient heat resistance under a temperature condition that is applied in firing of a precursor material of an inorganic compound.

The present specification is also directed to providing a sagger that, unlike a conventional sagger, is capable of reducing side reactions between a lithium-containing raw material loaded in the sagger and the main component of the sagger to prevent by-products such as Liₓ-(Al/Si)_{y}-O_{z} and the like from being produced.

The present specification is also directed to providing a sagger that has sufficient strength for effectively withstanding high-temperature firing conditions or pressure applied to the inner wall of the sagger when a precursor material is loaded in the sagger and then pressed.

The present specification is also directed to providing a sagger that resolves the problem that cracking is induced by stress resulting from a change in the volume of the sagger itself.

The objects of the present invention are not limited to the above-mentioned objects, and other objects and advantages of the present invention which are not mentioned can be understood from the following description and more clearly understood from exemplary embodiments of the present invention. In addition, it will be readily apparent that the objects and advantages of the present invention may be realized by means indicated in the claims and combinations thereof.

### [Technical Solution]

One aspect of the present invention provides a sagger for firing a precursor material, which has a space internally provided to load the precursor material, wherein a protective layer having a spinel content of 50 wt% or more is formed on at least a portion of the surface of the space internally provided to load the precursor material in the sagger.

In an embodiment, the protective layer may further include at least one selected from corundum, mullite, petalite, spodumene, cordierite, quartz, and zircon.

In one of several embodiments, the protective layer may have a corundum content of 25 wt% or less.

In another embodiment, in the protective layer, discontinuous aggregate including at least one selected from corundum, mullite, petalite, spodumene, cordierite, quartz, and zircon may be dispersed in a continuous spinel matrix.

In this case, the spinel matrix may have an average particle diameter of 0.5 to 25 µm, and the aggregate may have an average particle diameter of 150 to 900 µm.

In an embodiment, the protective layer may have a thickness of 2.5 to 4.0 mm.

In one of the above-described embodiments, the sagger may be made by sintering a petalite-containing raw material.

In this case, the sagger may be made by sintering a raw material in which discontinuous aggregate including at least one selected from spinel, corundum, mullite, cordierite, quartz, and zircon is dispersed in a continuous petalite matrix.

In addition, the raw material may have a petalite content of 20 to 40 wt%.

Additionally, the sagger may include a solid solution including β-spodumene and SiO₂ in an amount of 20 to 50 wt%.

### [Advantageous Effects]

A sagger for firing a precursor material according to various embodiments of the present specification can be repeatedly used in a process of firing a precursor material of an inorganic compound by including a ceramic material having sufficient heat resistance.

In addition, since the sagger for firing a precursor material according to various embodiments of the present specification includes a protective layer having low reactivity with lithium on at least a portion of a space internally provided to load a precursor material, side reactions in which the ceramic material reacts with a lithium-containing raw material to produce by-products such as Liₓ-(Al/Si)_{y}-O_{z} and the like can be minimized, and thus the lifespan of the sagger can be extended compared to a conventional sagger.

Furthermore, since the sagger for firing a precursor material has sufficient strength and generates less stress even when there are repeated temperature changes, the occurrence of cracks in the sagger is minimized, and thus excellent durability can be achieved.

Specific effects of the present invention in addition to the above-described effects will be described while details for implementing the present invention are described below.

### [Modes of the Invention]

In order to facilitate better understanding of the present invention, specific terms are defined in the present invention for convenience. Unless particularly defined otherwise, scientific and technical terms used herein will have meanings generally understood by those of ordinary skill in the art. In addition, it should be understood that, unless particularly indicated in the context, the singular forms include plural forms thereof, and the plural terms also include singular forms thereof.

In addition, unless otherwise specified, each characteristic may be measured at 25 °C and 1 bar.

Hereinafter, a sagger for firing a precursor material according to the present specification will be described in further detail.

### Protective layer of sagger

According to one aspect of the present invention, there is provided a sagger for firing a precursor material, which has a space internally provided to load a precursor material, wherein a protective layer having a spinel content of 50 wt% or more is formed on at least a portion of the surface of the space internally provided to load a precursor material in the sagger.

The sagger is a type of fire-resistant container that prevents direct contact with flame, smoke, and the like and is intended to manufacture a desired product by firing a precursor material.

Therefore, the sagger may have various shapes such as a prism, a cylinder, a cylindroid, and the like without limitation as long as a space capable of loading a precursor material is internally provided.

Examples of the precursor material include a lithium-based oxide for preparing a positive electrode active material.

In general, the precursor material for preparing a positive electrode active material includes lithium and at least one of cobalt, nickel, manganese, and iron, and a lithium-based composite oxide may be formed by firing the precursor material and used as a positive electrode active material.

In the firing process, lithium may infiltrate into the sagger and react, causing the component of the sagger to deteriorate and peel off.

In order to minimize the manufacturing cost of a final firing product, the sagger needs to be repeatedly used. However, since the sagger in which peeling has occurred may deteriorate product performance, it is impossible or extremely difficult to reuse the sagger.

According to one aspect of the present specification, the above problem may be solved by forming a protective layer having low reactivity with lithium on at least a portion of the surface of the space internally provided to load a precursor material.

In other words, the sagger may have a double structure in which at least a portion is composed of the body and the protective layer.

In an example of the sagger, a protective layer may be formed on the bottom of the internal space of the sagger, into which lithium is able to more easily infiltrate due to gravity, but the present invention is not limited thereto.

The sagger may be made of a ceramic material having a high melting point because it is inevitably repeatedly exposed to a high-temperature firing process.

The ceramic material is a material composed of a compound formed by binding a metal element such as silicon (Si), aluminum (Al), titanium (Ti), zirconium (Zr), magnesium (Mg), or the like to a non-metal or metalloid element such as oxygen, carbon, nitrogen, or the like through high-temperature thermal treatment.

For example, the ceramic material constituting the sagger for firing a precursor material according to the present specification may include various materials known as a sagger constituent, such as Al₂O₃, MgO, SiO₂, K₂O, ZrO, ZrO₂, CaO, FeₓO_{y}, and the like.

The properties of the ceramic material may vary depending on the chemical compositions represented by the above-described chemical formulas as well as the form of the chemical composition, that is, the type of mineral phase.

Examples of the mineral phase of the ceramic material that may be used in the sagger according to the present specification include spinel, corundum, mullite, cordierite, spodumene, zircon, quartz, petalite, eucryptite, lithium disilicate, lithium metasilicate, forsterite, magnesium metasilicate, alumina, silicate, and the like.

A description of the general forms of these materials follows, but the present invention is not limited thereto. For example, the thermal expansion coefficient of each component is an exemplary value measured in a temperature range of 25 °C to 800 °C.

Spinel is a mineral represented by MgO·Al₂O₃ in the cubic crystal system and may have, for example, a thermal expansion coefficient of about 6.72× 10⁻⁶/°C.

Corundum is a mineral represented by Al₂O₃ in the hexagonal crystal system and may have, for example, a thermal expansion coefficient of about 7.26×10⁻⁶/°C.

Mullite is a mineral represented by 3Al₂O₃·2SiO₂ in the orthorhombic crystal system and may have, for example, a thermal expansion coefficient of about 5.84×10⁻⁶/°C.

Cordierite is a mineral represented by 2MgO·2Al₂O₃·5SiO₂ in the orthorhombic crystal system and may have, for example, a thermal expansion coefficient of about 1.76×10⁻⁶/°C.

Spodumene is represented by Li₂O·Al₂O₃·nSiO₂, is divided into α-spodumene in the monoclinic crystal system and β-spodumene in the tetragonal crystal system according to production temperature, and may have, for example, a thermal expansion coefficient of about 0.44× 10⁻⁶/°C.

Zircon is a phase represented by ZrO₂·SiO₂ in the tetragonal crystal system and may have, for example, a thermal expansion coefficient of about 2.03×10⁻⁶/°C.

Quartz is a phase represented by SiO₂ in the hexagonal crystal system and may have, for example, a thermal expansion coefficient of about 7.64×10⁻⁶/°C.

These minerals may deteriorate to form phases such as Li₄SiO₄, β-LiAlO₂, γ-LiAlO₂, MgO, and the like by reacting with lithium.

The deterioration phase may become a factor that causes the peeling of the sagger by decreasing bonding strength between components.

Specifically, when a precursor material is fired using the sagger, lithium from the lithium-containing raw material (LiOH, etc.) included in the precursor material may infiltrate into the sagger and deposit impurities represented by a composition such as Liₓ-(Al/Si)_{y}-O_{z} inside the sagger.

As the sagger is repeatedly used, an impurity layer (which may also be referred to as a deterioration layer) having a predetermined thickness may be formed inside the sagger, especially on the lower surface of the sagger.

When the formed impurity layer cracks or peels off the sagger, the quality of firing using the sagger may be rapidly degraded, and the sagger may no longer be usable.

In order to suppress the reaction in which lithium of the lithium-containing raw material (LiOH, etc.) included in the precursor material infiltrates into the sagger and forms impurities, it is preferable that a matrix forming the protective layer in the space internally provided to load a precursor material in the sagger does not include SiO₂ or that the proportion of the SiO₂-containing phase in the matrix is less than half.

Accordingly, reactivity of the matrix of the protective layer with lithium may be lower than that of the aggregate of the protective layer.

Since reactivity with lithium increases in the order of spinel, mullite, cordierite, zircon, quartz, spodumene, and corundum among the above-described components, the composition of the protective layer may be adjusted to suppress the peeling of the sagger.

Among the ceramic materials used in the sagger in the present specification, spinel has the lowest reactivity with lithium, and the protective layer may include spinel in an amount of 50 wt% or more to solve the problem that the protective layer easily peels off when the sagger is repeatedly subjected to a firing process.

For example, the protective layer may include spinel in an amount of 50 wt% or more, preferably 50 to 85 wt% to improve the peel resistance of the sagger.

**In** an example, the protective layer may further include at least one selected from corundum, mullite, petalite, spodumene, cordierite, quartz, and zircon in addition to 50 wt% or more of spinel.

Accordingly, the protective layer may minimize the difference in coefficient of thermal expansion from the sagger body by including other components in addition to spinel.

For example, when the sagger body has a thermal expansion coefficient of 4.0×10⁻⁶/°C, the protective layer may be formed by mixing spinel having a thermal expansion coefficient of 6.72× 10⁻⁶/°C with a component having a relatively low thermal expansion coefficient.

When the difference in coefficient of thermal expansion between the sagger body and the protective layer formed therein is large, cracking may occur due to stress generated in the protective layer or the body in a repeated firing process, and thus the lifespan of the sagger may be degraded.

Therefore, the thermal expansion coefficients of the protective layer and the body may differ by 1.5×10⁻⁶/°C or less, preferably 1.0×10⁻⁶/°C or less, and more preferably 0.5× 10⁻⁶/°C or less, but the present invention is not limited thereto.

**In** addition, the composition of the protective layer may be adjusted to increase thermal conductivity, and thus firing efficiency may be enhanced.

Since the sagger is thermally treated in a kiln with a precursor material loaded therein, when the protective layer that comes in direct contact with the precursor material has high thermal conductivity, heat can be efficiently transferred to the precursor material.

Meanwhile, in addition to the deterioration of the sagger due to lithium infiltration and reaction, impact resulting from pressure applied when a precursor material is loaded, a volume change during sintering, and the like may also decrease the lifespan of the sagger.

Therefore, in another embodiment, the composition of the protective layer may be adjusted to increase the mechanical strength of the sagger.

In addition, the components other than spinel in the protective layer may be added to enhance bonding strength between the protective layer and the sagger body.

In one of several examples, the protective layer may have a corundum content of 25 wt% or less, and when corundum is included, the content may be 5 to 25 wt%, preferably 7.5 to 20 wt%.

When the protective layer includes corundum, the content exceeding 25 wt% may degrade the peel resistance of the sagger.

In another embodiment, the protective layer may be in a form in which discontinuous aggregate including at least one selected from corundum, mullite, petalite, spodumene, cordierite, quartz, and zircon is dispersed in a continuous spinel matrix.

Since a component having a small average particle diameter among components constituting the sagger has high reactivity with lithium in firing of a precursor material, spinel may be used as the matrix of the protective layer, and other components may be used as the aggregate having a relatively large average particle diameter.

When the protective layer has the above-described configuration, the fine particle matrix may be filled between the aggregates having a large average particle diameter.

Accordingly, in sintering of the sagger, the matrix and aggregate of the protective layer may be combined with each other to form a dense structure.

The dense structure may suppress a peeling phenomenon resulting from lithium infiltration and reaction and impart excellent impact resistance to the protective layer, thereby preventing the sagger from being damaged in firing of a precursor material.

As described above, the protective layer of the sagger for firing a precursor material according to the present specification is configured so that the aggregate and matrix having different average particle diameter ranges are mixed, and thus the porosity of the protective layer can be decreased, and simultaneously, specific gravity can be increased.

When the porosity of the protective layer is decreased, the infiltration of lithium derived from the lithium-containing raw material included in a precursor material into the sagger may be less likely to occur when the precursor material is fired using the sagger.

As an example of a protective layer composition capable of forming the dense structure, the spinel matrix may have an average particle diameter of 0.5 to 25 µm, and the aggregate may have an average particle diameter of 150 to 900 µm, but the present invention is not limited thereto.

There is no limitation on a method of preparing particles having the above particle diameters, and for example, evaporation-condensation, chemical vapor deposition, vapor-phase thermal decomposition, vapor-phase reduction, co-precipitation, hydrolysis, spray drying, freeze drying, thermal decomposition, reduction, solid-state reaction, sublimation, a solution method, or the like may be used according to the type of raw material and the desired characteristics.

In an example, the spinel matrix having a small average particle diameter may be obtained by micronizing a raw material through various grinding methods.

For example, a raw material may be ground by a grinding method such as ball milling, pebble milling, rod milling, roller milling, colloid milling, impact milling, jet milling, or the like.

In an embodiment, when the protective layer is excessively thin or thick, peel resistance may be degraded.

Although the mechanism is not clearly known, when the protective layer is excessively thin, lithium infiltrates into the sagger body by passing through the protective layer, and thus bonding strength between the sagger body and the protective layer may be degraded, thereby leading to peeling.

On the other hand, when the protective layer is excessively thick, the protective layer is insufficiently sintered, and thus a dense structure is not sufficiently formed. Therefore, lithium may more easily infiltrate, and thus peeling may occur.

Therefore, the protective layer may preferably have a thickness of 2.5 to 4.0 mm.

### Sagger body

A sagger body according to an embodiment of the present specification may be composed of a ceramic material as described above.

As described above, examples of the mineral phase of the ceramic material include spinel, corundum, mullite, cordierite, spodumene, zircon, quartz, petalite, eucryptite, lithium disilicate, lithium metasilicate, forsterite, magnesium metasilicate, alumina, silicate, and the like.

Despite having similar chemical compositions, these materials may have different volume change rates depending on a temperature change.

In the firing process of a precursor material using the sagger, cracks caused by repeated thermal shock may also become a factor that determines the lifespan of the sagger in addition to the peeling resulting from lithium infiltration and reaction.

For example, when the precursor material is expanded by firing, pressure is applied to the sagger, especially the inner wall of the sagger, and thus cracking may occur.

In addition, cracking may occur due to the difference in coefficient of thermal expansion between the protective layer and the body.

As another example, a change in the volume of each component in the sagger body composition may cause cracking to occur.

In order to minimize the occurrence of cracking, the sagger may be made by sintering a petalite-containing raw material.

Specifically, the sagger body may include a spodumene phase, especially β-spodumene, formed by sintering a petalite-containing raw material.

Since the spodumene phase is vulnerable to lithium infiltration and reaction, when a precursor material is repeatedly fired using the spodumene phase alone, peeling may occur in the sagger. However, as described above, a protective layer having excellent lithium resistance may be formed to suppress the lifespan of the sagger from being degraded due to peeling.

In addition to petalite, the sagger body may further include components such as spinel, corundum, mullite, cordierite, spodumene, zircon, quartz, eucryptite, lithium disilicate, lithium metasilicate, forsterite, magnesium metasilicate, alumina, silicate, and the like to have a coefficient of thermal expansion of a similar level to the above-described protective layer.

The difference in coefficient of thermal expansion between the sagger body and the protective layer may be adjusted to be 1.5×10⁻⁶/°C or less, preferably 1.0×10⁻⁶/°C or less, and more preferably 0.5×10⁻⁶/°C or less, but the present invention is not limited thereto.

Meanwhile, the sagger body may be composed of a matrix and aggregate each having a specific coefficient of thermal expansion.

The sagger is mainly used under high temperature firing conditions, and when ceramic materials used as the aggregate and the matrix have a high coefficient of thermal expansion, a volume change rate before and after firing is excessively increased, and thus the sagger may crack.

Therefore, it is preferable that at least one of the aggregate and matrix constituting the sagger body or at least one of the ceramic materials used as the aggregate and the matrix have a relatively low coefficient of thermal expansion.

The coefficient of thermal expansion of the matrix or aggregate may vary depending on the composition and absolute thermal expansion coefficient of the sagger.

For example, in an embodiment of the present specification, the sagger may be manufactured using aggregate having a relatively lower coefficient of thermal expansion than a matrix.

Since the aggregate is present in a discontinuous phase in the continuous matrix, when the aggregate has a high coefficient of thermal expansion in this sagger, local volume changes occur in some area of the sagger, and thus stress may be generated.

Generally, a ceramic material including SiO₂ in the crystal structure may have a lower coefficient of thermal expansion than a ceramic material not including SiO₂ in the crystal structure.

However, as described above, since SiO₂ may react with a lithium-containing raw material to form by-products, an oxide including SiO₂ in the crystal structure may be more suitable as the aggregate than the matrix.

In the sagger, among the components except petalite, a ceramic material including SiO₂ in the crystal structure may be used as the aggregate.

In addition, when the amount of the ceramic material including SiO₂ in the crystal structure as the aggregate increases, reactivity with a lithium-containing raw material may also increase.

Therefore, the amount of the ceramic material including SiO₂ in the aggregate may be adjusted in an appropriate range, or the amount of the aggregate relative to the matrix may be adjusted in an appropriate range to suppress by-products from being formed.

Meanwhile, in another embodiment of the present specification, the sagger may be formed using a matrix having a relatively lower coefficient of thermal expansion than aggregate.

In the sagger, a matrix having a low high-temperature volume change rate is used to alleviate the concentration of stress in the continuous matrix, and thus the occurrence of cracking in the sagger may be reduced.

In this sagger, since a deterioration layer is highly likely to be formed due to lithium infiltration and reaction, it is necessary to form a protective layer as described above.

In other words, in order to manufacture a sagger using petalite including SiO₂ in the crystal structure as a matrix, as described above, a protective layer having low reactivity with lithium needs to be formed to enhance peel resistance.

In an embodiment of the present specification, the sagger may be made by sintering a raw material in which discontinuous aggregate including at least one selected from spinel, corundum, mullite, cordierite, quartz, and zircon is dispersed in a continuous petalite matrix.

As described above, the sagger body for firing a precursor material according to the present specification is configured so that the aggregate and matrix having different average particle diameter ranges are mixed, and thus the porosity of the sagger body can be decreased, and simultaneously, specific gravity can be increased.

When the porosity of the sagger body is decreased, the infiltration of lithium passing through the protective layer among lithium atoms derived from the lithium-containing raw material included in the precursor material into the sagger may be less likely to occur when the precursor material is fired using the sagger.

Accordingly, even when a petalite raw material having high reactivity with lithium is used, degradation of the lifespan of the sagger due to peeling may be minimized.

In addition, when the specific gravity of the sagger body is increased, it is possible to impart sufficient strength for withstanding the pressure applied to the inner wall of the sagger when the sagger is pressed after being charged with a precursor material.

In an example, a raw material forming the continuous matrix may have an average particle diameter of 0.5 to 25 µm, and a raw material forming the discontinuous aggregate may have an average particle diameter of 150 to 900 µm, but the present invention is not limited thereto.

When petalite is included as the raw material forming the continuous matrix, the occurrence of cracking in the sagger due to a change in the volume of the sagger body at a high temperature may be minimized.

Other components having a relatively high volume change rate may be used in combination with a component capable of compensating for the volume change rate.

For example, a component whose volume expands at the temperature at which the firing process takes place may be mixed with a component whose volume contracts to minimize the total volume change rate.

Meanwhile, the petalite-derived spodumene phase may have a low volume expansion rate unlike an α-spodumene-derived structure.

Specifically, petalite may be converted into the form of a solid solution including β-spodumene and SiO₂ in a sagger sintering process.

Since the solid solution has a low volume change rate in a temperature range in which firing of a precursor material takes place, the occurrence of cracking in the sagger due to stress generated by volume change may be reduced.

Specifically, the petalite-derived spodumene phase may exhibit a volume change rate of 0.020% or less in a temperature range of 25 to 1,200 °C, whereas the α-spodumene-derived structure may exhibit a volume change rate of more than 0.1% in a temperature range of 25 to 1,200 °C.

The raw material may have a petalite content of 20 to 40 wt%, preferably 25 to 35 wt%, and more preferably 30 to 33 wt%.

When a petalite content of the raw material satisfies the above range, the crack resistance of the sagger can be significantly improved.

In addition, the sagger may include a solid solution including β-spodumene and SiO₂ in an amount of 20 to 50 wt%.

The petalite raw material may be sintered to form the solid solution, and the solid solution including β-spodumene and SiO₂ may also be formed by other methods to improve the crack resistance of the sagger.

In the solid solution, a molar ratio of Li₂O·Al₂O₃ and SiO₂ may be 1:7 to 9. When the molar ratio is outside the above range, a high-temperature volume change rate increases, and thus the crack resistance of the sagger may be degraded.

### Sagger manufacturing method

The sagger of the present specification may be manufactured by mixing ceramic raw materials, shaping the mixture to form a predetermined shape, and performing thermal treatment.

Among the raw materials, a material having an average particle diameter of 0.5 to 25 µm may be used as a matrix, and a material having an average particle diameter of 150 to 900 µm may be used as aggregate, but the present invention is not limited thereto.

There is no limitation on a method of preparing particles having the above particle diameters, and for example, evaporation-condensation, chemical vapor deposition, vapor-phase thermal decomposition, vapor-phase reduction, co-precipitation, hydrolysis, spray drying, freeze drying, thermal decomposition, reduction, solid-state reaction, sublimation, a solution method, or the like may be used according to the type of raw material and the desired characteristics.

The matrix having a small average particle diameter may be used after being micronized by various grinding methods. For example, a grinding method such as ball milling, pebble milling, rod milling, roller milling, colloid milling, impact milling, jet milling, or the like may be used.

In this case, a method of mixing the raw materials is not limited as long as the raw materials is able to be homogeneously mixed by dry mixing in which powder is directly mixed, wet mixing in which powder is mixed after being processed to form a slurry, or the like.

In addition, the raw materials may be mixed together with an organic binder such as a binder for easy shaping.

In this case, there is no limitation on the type of organic binder as long as the organic binder is able to be removed in a high-temperature thermal treatment process.

The amount of the used organic binder is not limited as long as it is capable of imparting a required level of bonding strength within a range which does not adversely affect the physical properties of a sagger after being removed in the thermal treatment process.

Meanwhile, the raw material mixture may be shaped to form a predetermined shape, and as a result, a sagger may be manufactured in the above-described form.

For example, the mixture may be shaped to form a pillar shape with an internal space by pressing using a press.

In an example, a protective layer in an internal space of the sagger may be provided by shaping both the raw material of a sagger body and the raw material of a protective layer.

For example, a method of laminating the raw material of a sagger body and the raw material of a protective layer and then pressing the laminate, a method of pressing a sagger body and then laminating the raw material of a protective layer, a method of pressing a sagger body and then applying the raw material of a protective layer, or a method of pressing a sagger body, then laminating the raw material of a protective layer, and pressing the protective layer may be used without limitation.

The shaped raw material of a sagger may be sintered through thermal treatment to manufacture a sagger.

In this case, a thermal treatment temperature of the raw material may be adjusted according to the composition of a sagger raw material and may be, for example, 1,150 to 1,800 °C.

A sintering temperature may vary depending on the chemical composition and phase of the raw material, and a phase change may occur according to a sintering temperature.

Therefore, the thermal treatment temperature may vary depending on the composition and phase of a desired sagger.

The thermal treatment may be performed once or several times.

When the thermal treatment is performed several times, the phase of a sagger may be adjusted by varying temperature and time in each step.

The sagger manufactured by the thermal treatment may be used as it is or after a coating layer is further formed.

Hereinafter, the present invention will be described in further detail with reference to examples thereof. It should be clear to those skilled in the art that the following examples are merely presented to exemplify the present invention, and the scope of the present invention is not limited to the following examples.

### Experimental Example 1. Evaluation of crack resistance according to composition of sagger body

In order to evaluate crack resistance according to the composition of a body, raw materials were shaped using a hydraulic press and then sintered at 1,250 °C to manufacture saggers having compositions shown in Table 1 below.

In this case, α-spodumene was added as a matrix in Comparative Example 2, and petalite was added as a matrix in Examples 1 and 2.

Both α-spodumene (Li₂O·Al₂O₃·4SiO₂; monoclinic crystal system) and petalite (Li₂O·Al₂O₃·8SiO₂) added as raw materials were phase-changed into β-spodumene (Li₂O·Al₂O₃·4SiO₂; tetragonal crystal system) in the sintering process.

**[Table 1]**

| Classification | Spinel | Cordierite | Spodumene | Corundum | Mullite | Zircon | Quartz | Other |
|---|---|---|---|---|---|---|---|---|
| Comparative Example 1 | 45 | 35 | - | 12.5 | 5 | 2.5 | - | - |
| Comparative Example 2 | 50 | - | 32.5 | 7.5 | 7.5 | - | - | 2.5 |
| Example 1 | 57.5 | - | 25 | 7.5 | 7.5 | - | - | 2.5 |
| Example 2 | 49 | - | 30 | 6.5 | 6.5 | - | 3 | 5 |

| | | | | | | | | |
|---|---|---|---|---|---|---|---|---|
| (unit: wt%) | | | | | | | | |

The same type of lithium composite oxide was loaded in each sagger and then fired for 12 hours by raising a temperature to 780 °C at 2 °C/min while maintaining an O₂ atmosphere.

While this firing process was repeated, the number of cycles immediately before the use of the sagger became impossible due to cracks was determined as crack resistance lifespan, and is shown in the following Table 2.

**[Table 2]**

| Classification | Comparative Example 1 | Comparative Example 2 | Example 1 | Example 2 |
|---|---|---|---|---|
| Crack resistance lifespan (times) | 4 | 5 | 10 | 15 |

Referring to Table 2, Examples 1 and 2, in which petalite was added in the manufacture of the sagger body, exhibited excellent crack resistance compared to the comparative examples.

Particularly, it can be confirmed that Comparative Example 2 exhibited a similar level of crack resistance lifespan to Comparative Example 1 despite the presence of a spodumene phase unlike Examples 1 and 2 exhibiting excellent crack resistance.

Although the mechanism is not clearly known, petalite having a high SiO₂ content is expected to exhibit excellent crack resistance because β-spodumene and SiO₂ form a solid solution and a high-temperature volume change is minimized.

### Experimental Example 2. Evaluation of reactivity of raw materials with lithium

LiOH may melt at 450 °C and may be lithiated as shown in the following reaction scheme.

Therefore, the component of the sagger may be mixed with LiOH, and then the mixture fired at 450 °C to confirm the reactivity of each raw material with lithium.

[Reaction Scheme] 2LiOH → Li₂O + H₂O

Spinel, mullite, cordierite, zircon, quartz, petalite, and corundum were each sintered at 1,250 °C and then mixed with LiOH in a weight ratio of 1:4.

The mixture was fired for 5 hours by raising a temperature to 450 °C at 2.5 °C/min, and then the reactivities of the raw materials with lithium were evaluated through XRD phase analysis, and are shown in the following Table 3.

**[Table 3]**

| Classification | Spinel | Mullite | Cordierite | Zircon | Quartz | Petalite (Spodumene) | Corundum |
|---|---|---|---|---|---|---|---|
| Raw material | 95 | 10.7 | 10.7 | 3.9 | 0.8 | - | - |
| Li₄SiO₄ | - | 26.6 | 59.7 | 96.1 | 99.2 | 94 | - |
| β-LiAlO₂ | 5 | 32.6 | 18.9 | - | - | 6 | 95.2 |
| γ-LiAlO₂ | - | 30.1 | - | - | - | - | 4.8 |
| MgO | - | - | 10.7 | - | - | - | - |

### (units: wt%)

As a result of evaluating lithium reactivity according to the proportion of raw materials that were phase-changed into Li₄SiO₄, β-LiAlO₂, γ-LiAlO₂, and MgO by deterioration by LiOH, it was confirmed that spinel had the lowest reactivity.

Corundum having the highest lithium reactivity was prepared by varying an average particle diameter and then mixed with LiOH in a weight ratio of 1:4.

The mixture was fired for 1 hour by raising a temperature to 450 °C at 2.5 °C/min, and then the reactivity of corundum with lithium according to an average particle diameter was evaluated through XRD phase analysis, and is shown in the following Table 4.

**[Table 4]**

| | | | |
|---|---|---|---|
| Average particle diameter (µm) | 4.00 | 9.47 | 12.48 |
| Corundum (wt%) | 32.1 | 41.3 | 41.8 |
| β-LiAlO₂ (wt%) | 50.4 | 40.8 | 31.6 |
| γ-LiAlO₂ (wt%) | 17.5 | 17.9 | 26.6 |

Referring to Table 4, it can be confirmed that as the average particle diameter of the raw material increased, lithium reactivity was lower. In addition, when firing was performed under the same conditions using particles with a larger particle diameter of 150 to 900 µm than corundum of Table 4, a lithium reaction was not confirmed.

According to the above result, the lifespan of the sagger can be increased by using a raw material having relatively low lithium reactivity as a fine particle matrix and a raw material having relatively high lithium reactivity as aggregate having a large average particle diameter.

### Experimental Example 3. Evaluation of peel resistance according to protective layer of sagger

The raw materials were laminated as two layers, shaped using a hydraulic press, and then sintered at 1,250 °C to manufacture saggers so that protective layers were formed with compositions shown in the following Table 5 on the bottoms of the internal spaces of the saggers, in which a positive electrode precursor was loaded, in Example 2.

**[Table 5]**

| Classification | Spinel | Cordierite | Spodumene | Corundum | Mullite | Zircon | Other |
|---|---|---|---|---|---|---|---|
| Comparative Example 1 | Without protective layer | | | | | | |
| Example 3 | 57.5 | 27.5 | 3.5 | 8.5 | 2.5 | - | 0.5 |
| Example 4 | 67.5 | 2.5 | 2 | 20 | - | 2.5 | 5.5 |
| Example 5 | 82.5 | - | 3 | 10 | - | - | 4.5 |

| | | | | | | | |
|---|---|---|---|---|---|---|---|
| (units: wt%) | | | | | | | |

The same type of lithium composite oxide was loaded in each sagger and then fired for 12 hours by raising a temperature to 780 °C at 2 °C/min while maintaining an O₂ atmosphere.

While this firing process was repeated, the number of cycles immediately before the use of the sagger became impossible due to peeling at the bottom was determined as peel resistance lifespan, and is shown in the following Table 6.

**[Table 6]**

| Classification | Comparative Example 1 | Example 3 | Example 4 | Example 5 |
|---|---|---|---|---|
| Peel resistance lifespan (times) | 4 | 8 | 8 | 8 |

Referring to the result of Experimental Example 2 and Table 6, in Comparative Example 1 not having a separate protective layer, 14.36% of the entire area of the bottom was peeled off in the 5^{th} firing cycle due to lithium infiltration and reaction, and thus the use of the sagger was impossible. On the other hand, it can be confirmed that all the examples having a protective layer having a spinel content of 50 wt% or more exhibited a peel resistance lifespan of 8 or more.

From the above result, it can be seen that a sagger exhibiting excellent peel resistance can be manufactured by forming a double structure in which a protective layer having low lithium reactivity is provided on the bottom of the sagger, which comes in contact with the loaded lithium composite oxide.

By varying the thickness of the protective layer in the sagger of Example 3, peel resistance lifespan was measured, and is shown in the following Table 7.

**[Table 7]**

| | | | | | | | |
|---|---|---|---|---|---|---|---|
| Thickness (mm) | 1.25 | 2.5 | 2.75 | 3 | 3.75 | 4 | 6 |
| Peel resistance lifespan (times) | 7 | 8 | 8 | 8 | 8 | 8 | 5 |

Referring to Table 7, it can be confirmed that when the protective layer was excessively thin or thick, peel resistance lifespan was degraded.

Although the present invention has been described in detail with reference to exemplary embodiments of the present invention, the scope of the present invention is not limited to exemplary embodiments. It should be understood by those skilled in the art that other exemplary embodiments may be proposed by adding, modifying, and eliminating components and these exemplary embodiments may be included within the scope of the present invention.

## Claims

1. A sagger for firing a precursor material, having a space internally provided to load the precursor material,
wherein a protective layer having a spinel content of 50 wt% or more is formed on at least a portion of the surface of the space internally provided to load the precursor material in the sagger.

2. The sagger of claim 1, wherein the protective layer further includes at least one selected from corundum, mullite, petalite, spodumene, cordierite, quartz, and zircon.

3. The sagger of claim 2, wherein the protective layer has a corundum content of 25 wt% or less.

4. The sagger of claim 2, wherein, in the protective layer, discontinuous aggregate including at least one selected from corundum, mullite, petalite, spodumene, cordierite, quartz, and zircon is dispersed in a continuous spinel matrix.

5. The sagger of claim 4, wherein the spinel matrix has an average particle diameter of 0.5 to 25 µm, and
the aggregate has an average particle diameter of 150 to 900 µm.

6. The sagger of claim 1, wherein the protective layer has a thickness of 2.5 to 4.0 mm.

7. The sagger of any one of claims 1 to 6, wherein the sagger is made by sintering a petalite-containing raw material.

8. The sagger of claim 7, wherein the sagger is made by sintering a raw material in which discontinuous aggregate including at least one selected from spinel, corundum, mullite, cordierite, quartz, and zircon is dispersed in a continuous petalite matrix.

9. The sagger of claim 7, wherein the raw material has a petalite content of 20 to 40 wt%.

10. The sagger of claim 7, wherein the sagger includes a solid solution including β-spodumene and SiO₂ in an amount of 20 to 50 wt%.
